# EUROPÄISCHE PATENTSCHRIFT

(11) **EP 1 142 463 B1**
(45) Veröffentlichungstag und Bekanntmachung des Hinweises auf die Patenterteilung: **03.11.2004**
(21) Anmeldenummer: 01107615.5
(22) Anmeldetag: 27.03.2001
(51) Int. Cl.: A01B 71/06

(54) **Anbauvorrichtung für ein antriebbares Traktor-Anbaugerät**
Mounting device for driveable tractor mounted implements
Dispositif de montage pour outils entrainés, montés sur tracteurs

(30) Priorität: 06.04.2000 DE 20006371 U
(43) Veröffentlichungstag der Anmeldung: 10.10.2001
(73) Patentinhaber: Fella-Werke GmbH & Co. KG, 90537 Feucht bei Nürnberg (DE)
(72) Erfinder: Pürrer, Josef, 90537 Feucht (DE); Kohl, Bernhard, 90537 Feucht (DE)
(74) Vertreter: Grünecker, Kinkeldey, Stockmair & Schwanhäusser Anwaltssozietät

(56) Entgegenhaltungen:
- EP-A- 0 887 010
- DE-A- 1 655 950
- DE-C- 4 314 250
- DE-C- 4 409 113
- FR-A- 1 257 784
- GB-A- 2 286 958
- US-A- 2 603 050

## Beschreibung

Die Erfindung betrifft eine Anbauvorrichtung der im Oberbegriff des Anspruchs 1 angegebenen Art.

Zum Anbringen eines Anbaugeräts an einen Traktor hat sich weltweit der Dreipunktanbau (ISO 730-1 bzw. DIN 9674) durchgesetzt. Der Dreipunktanbau gestattet es, das Anbaugerät auszuheben und in seiner Lage zum Traktor um die Längs- und Querachsen einzustellen. Für besondere Anwendungsfälle ist es jedoch notwendig, das Anbaugerät auch seitlich zu verschieben, beispielsweise ein Frontmähwerk an einem kleineren Traktor. Die Arbeitsbreite des Anbaugeräts, z. B. eines Mähwerks, ist durch den erforderlichen Kraftbedarf, durch die notwendige Bodenanpassbarkeit und auch gegebenenfalls durch die zulässige Gewichtsbelastung für den Traktor begrenzt. Beim Einsatz an Hanglagen werden zur Beseitigung der Kippgefahr Traktoren mit großer Spurweite bevorzugt oder Traktoren mit Zusatzrädem (Zwillingsreifen) zur Spurverbreiterung. Oftmals ist dann der Traktor breiter als die Arbeitsbreite des Anbaugeräts. Damit die Traktorräder nicht über stehendes Erntegut fahren, muss ein schmales Anbaugerät am Traktor seitlich nach rechts oder links versetzt werden. Solche Umstellungen müssen bequem während der Arbeit durchführbar sein. Zu diesem Zweck wird in der Praxis eine Querverschiebeeinrichtung zwischen dem Anbaurahmen und dem Anbaugerät eingesetzt. Bei Anbauvorrichtungen mit Querverschiebeeinrichtung sind zwei unterschiedliche Bauprinzipien bekannt. Das die Antriebsleistung für das wenigstens eine Werkzeug des Anbaugeräts vom Traktor übertragende Eingangsgetriebe ist entweder fest am Anbaurahmen oder fest am Anbaugerät angebracht. Im ersten Fall wird, insbesondere bei Verwendung eines Einphasen-Schnellkupplers, der mögliche seitliche Verschiebeweg durch die wenigstens eine Gelenkwelle begrenzt, die den Gesamthub der Querverschiebung zwischen dem Eingangsgetriebe und dem Werkzeug des Anbaugeräts aufzunehmen hat und nur eine beschränkte Baulänge haben kann. Im anderen Fall wird der nutzbare Querverschiebeweg durch den besonderes bei Verwendung eines Einphasen-Schnellkupplers (Kuppeldreieck) eingeschränkten Freiraum für die Antriebsgelenkwelle vom Traktor zum Eingangsgetriebe begrenzt. Außerdem ergeben sich in jedem Fall, d. h. bei am Anbaurahmen angebrachtem oder bei am Anbaugerät angebrachtem Eingangsgetriebe wegen des Querverschiebehubs unerwünscht starke Gelenkwellen-Beugewinkel.

Bei einem aus DE 1 655 950 A bekannten Zusatzgetriebe für einen Schlepper lässt sich das an der Dreipunkt-Aufhängung angebrachte Zusatzgetriebe seitlich verstellen und in der jeweiligen Einstellposition festlegen.

Bei einer aus EP 0 887 010 A bekannten Heubearbeitungsmaschine ist in einem Rechteckrahmen zentral und stationär ein Verteilergetriebe positioniert, das seitlichen Bewegungen des Rechteckrahmens synchron folgt.

Weiterer Stand der Technik ist enthalten in: DE 44 09 113 C, GB 2 286 958 A, FR 1 257 784 A, US 2 603 050 A, DE 43 14 250 C.

Der Erfindung liegt die Aufgabe zugrunde, eine Anbauvorrichtung der eingangs genannten Art zu schaffen, bei der trotz des begrenzten Raums innerhalb des Einphasen-Kupplers (Kuppeldreieck) große Querverschiebehübe möglich und starke Gelenkwellen-Beugewinkel vermieden sind.

Die gestellte Aufgabe wird mit den Merkmalen des Anspruchs 1 gelöst.

Da das Eingangsgetriebe bei einer Querverschiebung des Anbaugeräts nicht nur relativ zum Anbaurahmen verstellbar ist, sondern auch nacheilend zum Werkzeug des Anbaugerätes, führt das Einbaugetriebe bei einer Querverschiebung einen Querhub relativ zum Anbaurahmen und gleichzeitig auch nacheilend zum Anbaugerät aus. Obwohl für die Antriebsgelenkwelle und die Ausgangswelle des Eingangsgetriebes die vorerwähnten baulichen Beschränkungen gelten, ist der mögliche Querhub des Anbaugerätes groß, da er der Summe der Querverstellmöglichkeiten der Antriebsgelenkwelle und der Ausgangswelle entspricht. Da bei einer Querverschiebung das Eingangsgetriebe weniger weit verschoben wird als das Anbaugerät, ergeben sich ferner günstigere Beugewinkel zwischen der Antriebsgelenkwelle und dem Eingangsgetriebe und an der Seite der Ausgangswelle des Eingangsgetriebes. Unabhängig von der Bauweise der beanspruchten Querverschiebeeinrichtung ist dafür Sorge getragen, dass bei einer Querverschiebung des Anbaugeräts das Eingangsgetriebe relativ zum Anbaurahmen querverstellt und dabei nacheilend zum Anbaugerät bewegt wird, das heißt eine Bewegung in derselben Richtung wie das Anbaugerät, jedoch in kleinerem Ausmaß, ausführt.

Baulich einfach ist die beanspruchte Querverschiebeeinrichtung nach Art eines parallelogrammartig verstellbaren Lenkervierecks, wobei das Eingangsgetriebe innerhalb der Tiefe des Lenkervierecks angeordnet und bewegungsübertragend mit wenigstens einem der verschwenkbaren Lenker verbunden ist. Damit wird automatisch für das Eingangsgetriebe ein relativ zum Querhub des Anbaugerätes kleinerer Querhub erzielt.

Zweckmäßigerweise befindet sich das Eingangsgetriebe in etwa in der Hälfte der Tiefe des Lenkervierecks. Damit beträgt der Querhub des Eingangsgetriebes in etwa den halben Querhub des Anbaugeräts, womit an der Eingangs- und an der Ausgangsseite des Eingangsgetriebes in etwa gleiche Gelenkwellen-Beugeverhältnisse erreicht werden.

Das Eingangsgetriebe ist stabil gelagert, wenn es von einem Koppelglied getragen wird, das an beiden verschwenkbaren Lenkern angebracht ist. Das Koppelglied trägt ferner zur Versteifung des Lenkervierecks bei.

Zum Positionieren und Verstellen der Querverschiebeeinrichtung wird zweckmäßig wenigstens ein Stellglied verwendet, das ein Hydromotor (Hydraulikzylinder), ein elektrischer Aktuator oder eine, gegebenenfalls elektromotorische, Stellspindel sein kann.

Baulich einfach wird das Stellglied zwischen Angriffspunkten an beiden Lenkern eingesetzt, welche Angriffspunkte bezüglich des Basisteils zueinander versetzt sind.

Günstige Kraftübertragungsverhältnisse ergeben sich, wenn das Stellglied an zwei diagonal gegenüberliegenden Gelenken des Lenkervierecks angreift.

Zweckmäßig ist das Eingangsgetriebe ein Winkelgetriebe, das eine zur Seite oder nach unten ragende Ausgangswelle besitzt. Vorteilhafterweise kann die Ausgangswelle aber auch seitlich schräg nach unten verlaufen, so dass die querliegende Gelenkwelle in einer sogenannten W-Beugung angeordnet ist. Dadurch ergibt sich für jedes der beiden Kreuzgelenke eine möglichst geringe Beugung.

Mit der möglichen Verschwenkbarkeit der Antriebsgelenkwelle und dem Verschiebe- und Schwenkbereich der zweiten zwischen dem Winkelgetriebe mit den Mähorganen angeordneten Gelenkwelle ergibt sich ein großer Querverschiebeweg für das Anbaugerät.

Einer Anbringung des Eingangsgetriebes derart, dass dessen Querhub etwa die Hälfte des Querhubs des Anbaugerätes beträgt, ist der Vorzug zu geben. Es sind jedoch auch Ausführungen denkbar, bei denen der Querhub des Eingangsgetriebes größer oder kleiner als die Hälfte des Querhubs des Anbaugerätes ist.

Anhand der Zeichnung werden Ausführungsformen des Erfindungsgegenstandes erläutert.

Es zeigen:
- Fig. 1: eine perspektivische Ansicht einer ein Anbaugerät tragenden Anbauvorrichtung in einer Mittellage,
- Fig. 2: die Anordnung von Fig. 1 in einer querverschobenen Lage.
- Fig. 3: schematisch die Gelenkwellenkinematik vor und nach einer Querverschiebung in der Ausführungsform der Fig. 1 und Fig. 2, und
- Fig. 4: schematisch die Gelenkwellenkinematik vor und nach einer Querverschiebung bei einer weiteren Ausführungsform.

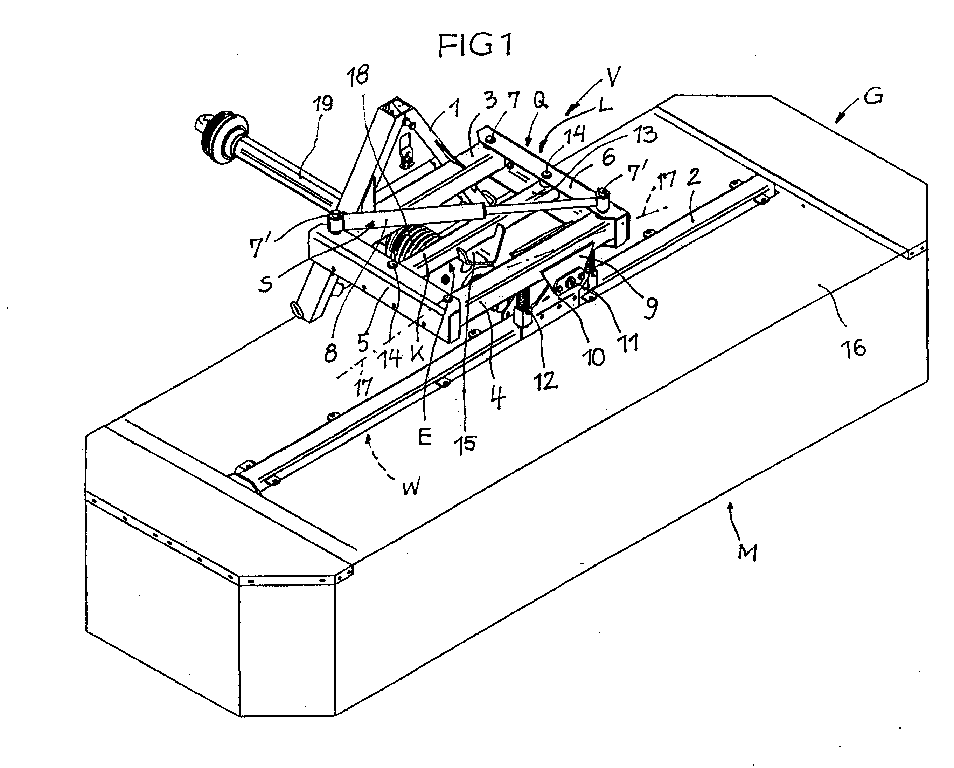

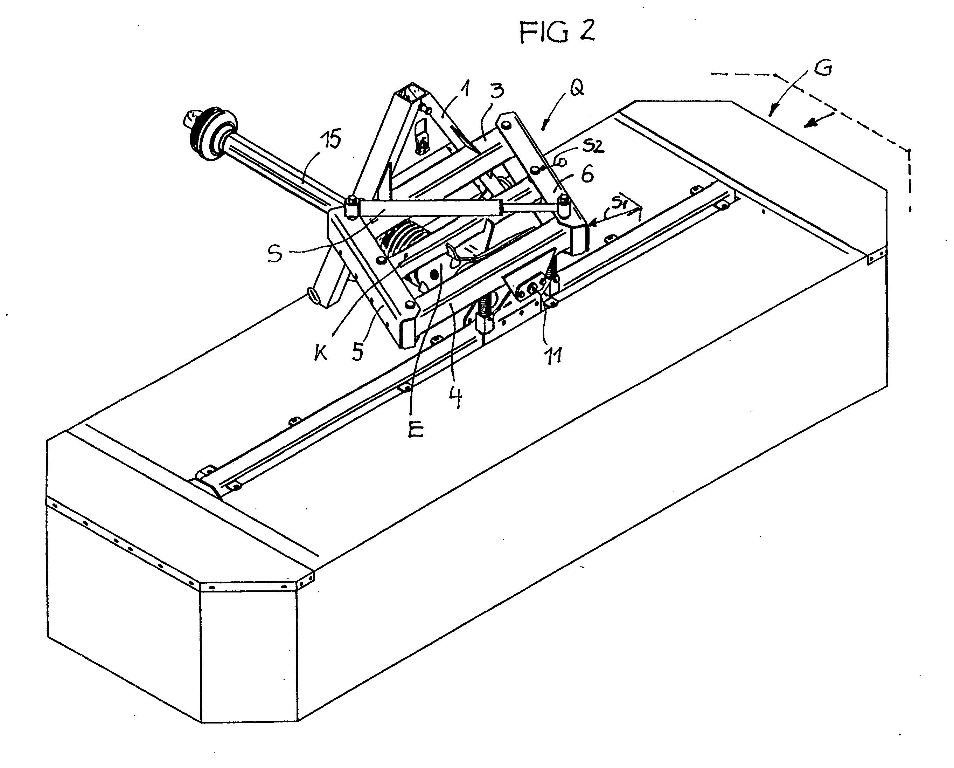

Eine in den Fig. 1 und Fig. 2 gezeigte Anbauvorrichtung V für ein landwirtschaftliches Anbaugerät G ist beispielhaft für eine Mähvorrichtung M mit wenigstens einem nicht näher hervorgehobenen Mähwerkzeug W gezeigt. Im Besonderen handelt es sich um ein Front-Anbaugerät, das an der Frontseite eines nicht gezeigten Traktors montierbar ist.

Die Anbauvorrichtung V weist einen in üblicher Weise mit der Dreipunkt Hebevorrichtung des Traktors verbindbaren Anbaurahmen 1 auf, an dem mittels einer Querverschiebeeinrichtung Q eine Rahmenstruktur 2 des Anbaugerätes G querverschiebbar angebracht ist. Die Querverschiebeeinrichtung Q ist als Lenkerviereck L ausgebildet und weist einen vom Anbaurahmen 1 gebildeten oder - wie gezeigt - an diesem angebrachten Basisteil 3, einen von diesem beabstandeten, dazu parallelen Teil 4 und die Teile 3 und 4 verbindende, um Gelenke 7 schwenkbare Lenker 5 und 6 auf. Das Lenkerviereck L ist in etwa horizontal liegend angeordnet.

Zum Positionieren und Verstellen der Querverschiebeeinrichtung Q dient ein Stellglied S, beispielsweise ein Hydraulikzylinder, ein elektrischer Aktuator oder eine gegebenenfalls elektromotorische Verstellspindel 8, das bei der gezeigten Ausführungsform zwei diametral gegenüberliegende Gelenke bzw. nach oben verlängerte Gelenkbolzen 7' des Lenkervierecks L verbindet. Durch Verlängern oder Verkürzen des Stellgliedes S lässt sich das Lenkerviereck L aus der in Fig. 1 gezeigten Mittellage zur einen oder zu anderen Seite (Fig. 2) verstellen und festsetzen. Das Stellglied S könnte abweichend (nicht gezeigt) in kürzerer Ausführung zwischen entsprechend versetzten Anlenkpunkten an den beiden Lenkern 5, 6 angreifen oder an nur einem Anlenkpunkt an einem der Lenker 5, 6, ausgehend von einem Widerlager am Basisteil 3 oder am Anbaurahmen 1.

Das Anbaugerät G ist am Teil 4 des Lenkervierecks L abgehängt. Zwischen einer Abstützung 9 am Teil 4 und einer Abstützung 10 an der Rahmenstruktur 2 des Anbaugeräts G ist eine etwa horizontale und in Fahrtrichtung orientierte Gelenkachse 11 vorgesehen, um welche das Anbaugerät G kippbar ist. Dämpfende Anschlageinrichtungen 12 wirken in dieser Bewegungsrichtung des Anbaugerätes G zwischen der Querverschiebeeinrichtung Q und der Rahmenstruktur 2.

Innerhalb der Tiefe des Lenkervierecks L, wie gezeigt bei etwa der halben Tiefe, ist zwischen die beiden Lenker 5, 6 ein zum Basisteil 3 paralleles Koppelglied K eingesetzt, z. B. ein Querträger 13, der an beiden Lenkern 5, 6 in Gelenkstellen 14 schwenkbar abgestützt ist. Mittels eines Haltebügels 15 ist am Koppelglied ein Eingangsgetriebe E gehaltert. Eingangsseitig ist das Eingangsgetriebe E, beispielsweise bei 18, mit einer Antriebsgelenkwelle 19 gekoppelt, die durch den Anbaurahmen 1 zum nicht gezeigten Traktor führt. Ausgangsseitig ist wenigstens eine Verschiebe-Gelenkwelle 17 vorgesehen, die vom Eingangsgetriebe E direkt zu den Werkzeugen W des Anbaugeräts G führt, oder zu wenigstens einem den Werkzeugen W zugeordneten Getriebe.

An der Rahmenstruktur 2 des Anbaugeräts G ist eine allseitige übliche Abdeckung 16 vorgesehen.

In Fig. 2 ist das Anbaugerät G aus der Mittellage der Fig. 1 (in Fig. 2 gestrichelt angedeutet) über einen vorbestimmten Hubweg S1 zu einer Seite verschoben, beispielsweise durch Verkürzen des Stellgliedes S. Das Koppelglied K mit dem Eingangsgetriebe E hat den Hubweg S2 ausgeführt, der etwa der Hälfte von S1 entspricht. Die Antriebsgelenkwelle 15 ist entsprechend dem Querhub S2 verstellt. Die Ausgangswelle ist entsprechend der Differenz zwischen den Hüben S1 und S2 verstellt worden. Eine nicht gezeigte Querverschiebung des Anbaugeräts G in der entgegengesetzten Richtung wird durch eine Verlängerung des Stellgliedes S eingestellt, wobei sich für die eingangs- und ausgangsseitigen Gelenkwellen zum Eingangsgetriebe E die gleichen, aber umgekehrten Relativverhältnisse ergeben. Durch Auswahl der Position des Koppelgliedes K innerhalb der Tiefe des Lenkervierecks L lässt sich die Relation zwischen dem Querhub des Eingangsgetriebes E und dem Anbaurahmen 1 und die Relation zwischen dem Querhub des Eingangsgetriebes E und dem Anbaugerät G entsprechend einstellen. Liegt das Kuppelglied K in etwa in der Hälfte der Tiefe des Lenkervierecks L, dann wird bei einer Querverschiebung das Eingangsgetriebe E etwa halb so weit wie das Anbaugerät G seitlich verstellt.

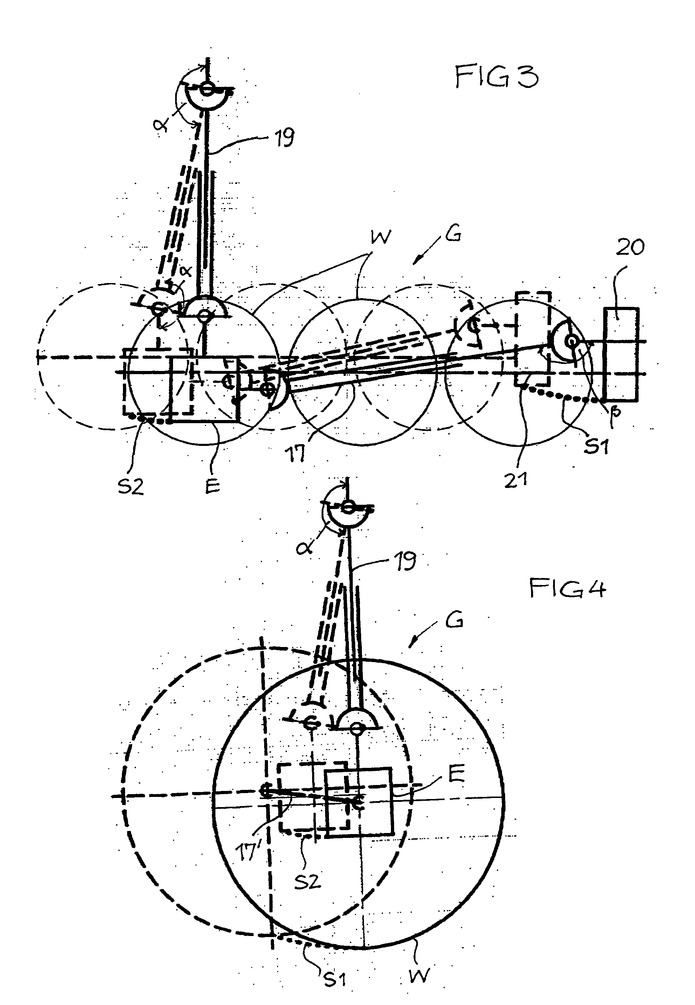

In Fig. 3 ist schematisch angedeutet, wie das Anbaugerät G über den Hub S1 verstellt ist. Die als Verschiebewelle ausgebildete Gelenkwelle 17 an der Ausgangseite des Eingangsgetriebes E führt zu wenigstens einem seitlichen Getriebe 20, an das über eine Antriebswelle 21 mehrere Werkzeuge W angeschlossen sind. Bei der Verschiebung des Anbaugeräts über den Hub S1 hat das Eingangsgetriebe den kleineren Hub S2 ausgeführt. Dadurch ist die beispielsweise als Schiebegelenkwelle ausgebildete Gelenkwelle 19 relativ zum Anschlusspunkt an den Traktor seitlich verschwenkt worden, so dass ihre beiden Enden jeweils einen Beugewinkel α definieren (W-Beugung). Die Gelenkwelle 17 wurde dabei in etwa um die Differenz der Verschiebewege S1 und S2 verkürzt.

In der Ausführungsform der Fig. 4 ist beispielsweise ein einziges Werkzeug W gezeigt, das vom Eingangsgetriebe E mit einer nach unten verlaufenden, als Schiebegelenkwelle ausgebildeten Gelenkwelle 17' angetrieben wird. Bei einer Querverschiebung wurde das Werkzeug W über den Hub S1 verstellt, während das Eingangsgetriebe E über den kleineren Hub S2 verschoben ist. Dadurch ist die Gelenkwelle 19 unter Bildung untereinander in etwa gleicher Beugewinkel α relativ zur Verbindung mit dem Traktor seitlich verschwenkt, und ist auch die Gelenkwelle 17' an der Ausgangsseite des Eingangsgetriebes seitlich verschwenkt worden, wobei sie an ihren beiden Enden untereinander im Wesentlichen gleiche Beugewinkel bildet (jeweils eine W-Bewegung).

Selbst bei einem relativ großen Hub S1 des Anbaugeräts G werden die jeweiligen Gelenkwellenstränge relativ gering und mit untereinander im Wesentlichen gleichen Knickwinkeln gebeugt, weil das Eingangsgetriebe E den Hub des Anbaugeräts mit einem Teilhub mitmacht. Da sich beide Gelenkwellenstränge verstellen, ist die relative Verschwenkung jedes Gelenkwellenstranges nur moderat, und ist auch die Auszieh- oder Einschiebelänge in jedem Gelenkwellenstrang nicht exzessiv.

## Patentansprüche

1. Anbauvorrichtung (V) für ein antreibbares Traktor-Anbaugerät (G), insbesondere für ein Frontanbau-Mähwerk (M), mit einem Anbaurahmen (1), an dem das Anbaugerät (G) mit einer Querverschiebeeinrichtung (Q) querverstellbar angebracht ist, und mit einem in der Anbauvorrichtung vorgesehenen Eingangsgetriebe (E), das einen Traktor-Zapfwellen-Anschluss (18) aufweist und über wenigstens eine Ausgangswelle (17, 17') mit wenigstens einem Werkzeug (W) des Anbaugeräts verbunden ist, **dadurch gekennzeichnet, dass** das Eingangsgetriebe (E) in der als parallelogrammartig verstellbares Lenkerviereck (L) mit verschwenkbaren Lenkern (5, 6) ausgebildeten Querverschiebeeinrichtung (Q) innerhalb der Tiefe des Lenkervierecks (L) an wenigstens einem der verschwenkbaren Lenker (5, 6) abgestützt und zumindest im Wesentlichen in Querverstellrichtung relativ zum Anbaurahmen (1) und nacheilend zum Werkzeug (W) des Anbaugeräts (G) mit kleinerem Hubweg (S2) als dieses verstellbar ist.

2. Anbauvorrichtung nach Anspruch 1, **dadurch gekennzeichnet, dass** ein Basisteil (3) des Lenkervierecks (L) der Anbaurahmen (1) oder an dem Anbaurahmen (1) angebracht ist, und dass an dem dem Basisteil (3) gegenüberliegenden, über die verschwenkbaren Lenker (5, 6) mit dem Basisteil (3) verbundenen Teil (4) das Anbaugerät (G) abgehängt ist.

3. Anbauvorrichtung nach Anspruch 2, **dadurch gekennzeichnet, dass** ein Eingangsgetriebe (E) zumindest in etwa in der Hälfte der Tiefe des Lenkervierecks (L) angeordnet ist.

4. Anbauvorrichtung nach Anspruch 2, **dadurch gekennzeichnet, dass** im Lenkerviereck (L) zwischen dem Basisteil (3) und dem anderen Teil (4) an beiden Lenkern (5, 6) ein zum Basisteil (3) paralleles Koppelglied (K) eingesetzt ist, das das Eingangsgetriebe (E) trägt.

5. Anbauvorrichtung nach Anspruch 1, **dadurch gekennzeichnet, dass** das Stellglied (S) zum Positionieren und Verstellen der Querverschiebeeinrichtung (Q) ein Hydromotor, ein elektrischer Aktuator oder eine gegebenenfalls elektromotorische Spindel (8) vorgesehen ist.

6. Anbauvorrichtung nach wenigstens einem der vorhergehenden Ansprüche, **dadurch gekennzeichnet, dass** an jedem Lenker (5, 6) ein Angriffspunkt (7') für das Stellglied (S) vorgesehen ist, und dass der Angriffspunkt (7') des einen Lenkers (5) weiter vom Basisteil (3) entfernt ist als der Angriffspunkt (7') am anderen Lenker (6).

7. Anbauvorrichtung nach Anspruch 6, **dadurch gekennzeichnet, dass** das Stellglied (S) an zwei diagonal gegenüberliegende Gelenke (7') des Lenkervierecks (L) angeschlossen ist.

8. Anbauvorrichtung nach Anspruch 1, **dadurch gekennzeichnet, dass** das Eingangsgetriebe (E) ein Winkelgetriebe mit einer nach unten ragender, relativ zum Winkelgetriebe schwenkbaren Ausgangswelle (17') z.B. einer Verschiebe-Gelenkwelle ist.

9. Anbauvorrichtung nach Anspruch 1, **dadurch gekennzeichnet, dass** das Eingangsgetriebe (E) ein Winkelgetriebe mit einer schräg in das Anbaugerät (G) greifenden Ausgangswelle (17) ist, die als Verschiebe-Gelenkwelle ausgebildet ist.

## Claims

1. Mounting device (V) for a driveable tractor-mounted unit (G), in particular for a front-mounted mowing machine (M), with a mounting frame (1) to which the mounted unit (G) is attached by means of a transversely displaceable transversely adjustable unit (Q), and an input gear (E) incorporating connection (18) for a tractor power take-off shaft disposed in the mounting device and connected to at least one implement (W) of the mounted unit by means of at least one output shaft (17, 17'), **characterised in that** the input gear (E) is supported in the transversely adjustable unit (Q) provided in the form of a displaceable parallelogram-type quadrangulated link structure (L) with articulated struts (5,6) on at least one of the articulated struts (5, 6) within the depth of the quadrangulated link structure (L) and is displaceable at least in the essentially transverse direction of displacement relative to the mounting frame (1) and lagging relative to the implement (W) of the mounted unit (G) with a shorter stroke (S2) than the latter.

2. Mounting device as claimed in claim 1, **characterised in that** a base part (3) of the quadrangulated link structure (L) forms part of the mounting frame (1) or is mounted on the mounting frame (1) and that the mounted unit (G) is suspended on the part (4) lying opposite the base part (3) and connected to the base part (3) by means of the articulated struts (5, 6).

3. Mounting device as claimed in claim 2, **characterised in that** an input gear (E) is disposed in at least the half depth of the quadrangulated link structure (L).

4. Mounting device as claimed in claim 2, **characterised in that** a coupling member (K) parallel with the base part (3) and bearing the input gear (E) is inserted in the quadrangulated link structure (L) on the two struts (5, 6) between the base part (3) and the other part (4).

5. Mounting device as claimed in claim 1, **characterised in that** the actuator member (S) for positioning and displacing the transversely adjustable unit (Q) is a hydraulic motor, an electric actuator or a spindle (8) which may optionally be driven by an electric motor.

6. Mounting device as claimed in at least one of the preceding claims, **characterised in that** a contact point (7') for the actuator member (S) is provided on each strut (5, 6) and the contact point (7') of the one strut (5) is spaced at a greater distance from the base part (3) than the contact point (7') on the other strut (6).

7. Mounting device as claimed in claim 6, **characterised in that** the actuator member (S) is connected to two diagonally opposite articulated joints (7') of the quadrangulated link structure (L).

8. Mounting device as claimed in claim 1, **characterised in that** the input gear (E) is an angle gear with a downwardly projecting output shaft (17') which can be pivoted relative to the angle gear, e.g. a sliding articulated shaft.

9. Mounting device as claimed in claim 1, **characterised in that** the input gear (E) is an angle gear with an output shaft (17) which locates in the mounted unit (G) at an angle and is provided in the form of a sliding articulated shaft.

## Revendications

1. Dispositif d'attelage (V) pour un équipement commandable attelé à un tracteur (G), en particulier pour une faucheuse frontale (M), comprenant un cadre d'attelage (1) sur lequel l'équipement commandable (G) est fixé à l'aide d'un dispositif de déport latéral (Q) de manière à pouvoir être déporté latéralement et comprenant un engrenage d'entrée (E) prévu dans le dispositif d'attelage qui présente une liaison avec la prise de force (18) du tracteur et qui est relié à au moins un outil (W) de l'équipement commandable par l'intermédiaire d'au moins un arbre de sortie (17, 17'), **caractérisé en ce que** l'engrenage d'entrée (E) est appuyé, au niveau du dispositif de déport latéral (Q) réalisé sous forme de quadrilatère de guidage (L) mobile, analogue à un parallélogramme déformable et comprenant des bras pivotants (5, 6), sur au moins l'un des bras pivotants (5, 6), dans la hauteur du quadrilatère de guidage (L), et **en ce qu'**il est mobile au moins essentiellement dans la direction de déport latéral par rapport au cadre d'attelage (1) et en décalage par rapport à l'outil (W) de l'équipement commandable (G) avec une course de relevage (S2) plus petite que celle de ce dernier.

2. Dispositif d'attelage selon la revendication 1, **caractérisé en ce qu'**un élément de base (3) du quadrilatère de guidage (L) fait partie du cadre d'attelage (1) ou est fixé sur le cadre d'attelage (1), et **en ce que** l'équipement commandable (G) est suspendu au niveau de l'élément (4) se trouvant à l'opposé de l'élément de base (3) et relié à l'élément de base (3) par l'intermédiaire des bras pivotants (5, 6).

3. Dispositif d'attelage selon la revendication 2, **caractérisé en ce qu'**un engrenage d'entrée (E) est disposé au moins approximativement au milieu de la hauteur du quadrilatère de guidage (L).

4. Dispositif d'attelage selon la revendication 2, **caractérisé en ce que**, dans le quadrilatère de guidage (L), un élément de couplage (K), parallèle à l'élément de base (3) et qui porte l'engrenage d'entrée (E), est monté entre l'élément de base (3) et l'autre élément (4) sur les deux bras (5, 6).

5. Dispositif d'attelage selon la revendication 1, **caractérisé en ce que**, comme élément de réglage (S) pour le positionnement et le déplacement du dispositif de déport latéral (Q) est prévu un moteur hydraulique, un actionneur électrique ou éventuellement un vérin électromoteur (8).

6. Dispositif d'attelage selon au moins l'une des revendications précédentes, **caractérisé en ce qu'**un point d'attache (7') pour l'élément de réglage (S) est prévu sur chaque bras (5, 6), et **en ce que** le point d'attache (7') de l'un des bras (5) est plus éloigné de l'élément de base (3) que le point d'attache (7') de l'autre bras (6).

7. Dispositif d'attelage selon la revendication 6, **caractérisé en ce que** l'élément de réglage (S) est relié à deux articulations (7') du quadrilatère de guidage (L) diagonalement opposées.

8. Dispositif d'attelage selon la revendication 1, **caractérisé en ce que** l'engrenage d'entrée (E) est un engrenage à renvoi d'angle comprenant un arbre de sortie (17') par exemple un arbre de transmission de déport s'étendant vers le bas et pivotant par rapport à l'engrenage à renvoi d'angle.

9. Dispositif d'attelage selon la revendication 1, **caractérisé en ce que** l'engrenage d'entrée (E) est un engrenage à renvoi d'angle comprenant un arbre de sortie (17) qui s'engrène obliquement dans l'équipement commandable (G) et qui est réalisé sous forme d'arbre de transmission de déport.
